# EUROPÄISCHE PATENTSCHRIFT

(11) **EP 0 740 242 B1**
(45) Veröffentlichungstag und Bekanntmachung des Hinweises auf die Patenterteilung: **03.11.1999**
(21) Anmeldenummer: 96106353.4
(22) Anmeldetag: 23.04.1996
(51) Int. Cl.: G05D 16/20, F23N 1/00

(54) **Servodruckregler für ein Gasventil**
Servo pressure regulator for a gas valve
Servo-régulateur de pression pour une soupape à gaz

(30) Priorität: 26.04.1995 DE 19515286
(43) Veröffentlichungstag der Anmeldung: 30.10.1996
(73) Patentinhaber: HONEYWELL B.V., 1101 EA Amsterdam Z.O. (NL)
(72) Erfinder: Hietkamp, Albert, 7812 NT Emmen (NL)
(74) Vertreter: Rentzsch, Heinz, Dipl.-Ing.

(56) Entgegenhaltungen:
- EP-A- 0 437 837
- FR-A- 1 289 128
- US-A- 4 254 796

## Beschreibung

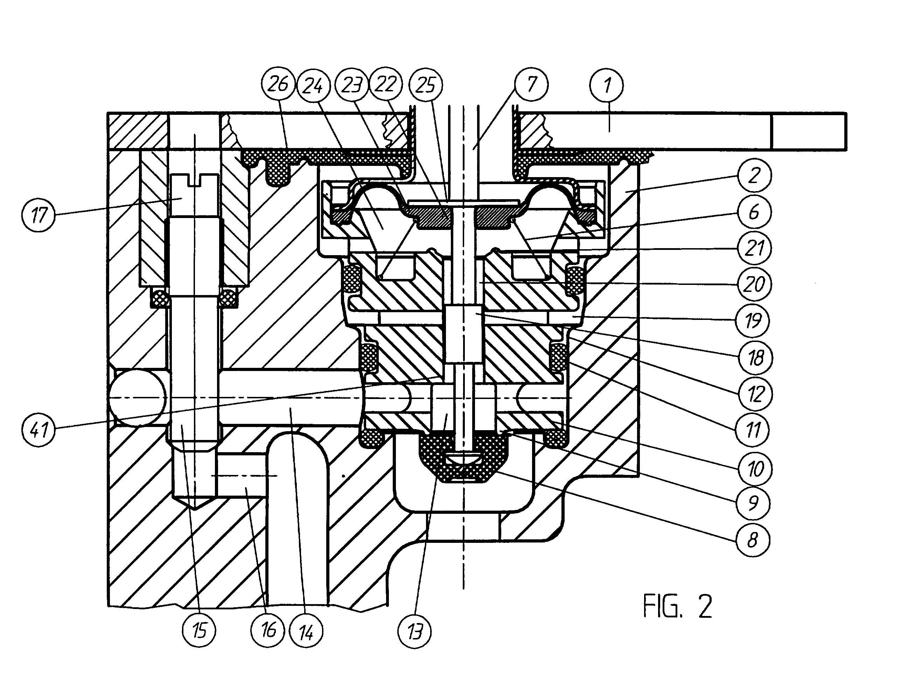

Die Erfindung betrifft einen Druckregler zum Erzeugen des Steuerdrucks für ein membrangesteuertes Gasventil, d.h. einen sogenannten Servodruckregler. Ein solcher Gasdruckregler mit den Merkmalen des Oberbegriffs von Anspruch 1 ist aus EP-0 508 357 bekannt. Um der Antriebskammer des Gasventils einen vorgegebenen Mindeststeuerdruck zuzuführen, ist dort in Figur 2 an die den Servodruck führende Kammer eine zum Auslaß des Gasventils führende Leitung angeschlossen, in welcher ein Druckbegrenzer angeordnet ist.

Bei einem weiteren, aus EP-0 272 348 bekannten Druckregler der eingangs genannten Art wirkt ein einziger Elektromagnetantrieb über zwei getrennte Betätigungshebel, zum einen auf die Ventilstange eines Einschaltventils und zum anderen auf die Membran des Druckreglers ein. Beim Ingangsetzen eines an den Regler angeschlossenen Brenners wird zunächst das Einschaltventil geöffnet und zugleich ein nur beim Abschalten des Reglers wirksamer Abblaskanal zwischen Ventilauslaß und Einschaltventil verschlossen. Die zum Zünden der Flamme erforderliche Mindestgasmenge wird durch eine Mindestöffnung des vom Druckregler beaufschlagten Regelventils bereitgestellt und läßt sich mit Hilfe eines verstellbaren Anschlags vorgeben, der mit einem auf der Antriebsstange für den Membrandruckregler befindlichen Gegenanschlag zusammenarbeitet.

Ferner zeigt die DE-A 40 01 329 eine Gasarmatur mit einem membrangesteuerten Gasdruckregler, dem ein erstes Sicherheitsventil vorgeschaltet und ein zweites Sicherheitsventil nachgeschaltet ist. Die Membran des Druckreglers steht unter dem Einfluß einer Regelfeder, deren Vorspannung mechanisch verstellbar ist. Zusätzlich zu dieser Feder kann ein pneumatischer Steuerdruck, z.B. der Feuerungsdruck auf die Membran des Druckreglers einwirken. Der vom Druckregler erzeugte Steuerdruck gelangt in die Antriebskammer für einen druckentlasteten Kolbenschieber, der ohne gleitenden Kontakt in Bohrungen von zwei Gehäusetrennwänden verschiebbar ist, so daß zwischen ihm und den Wandungen der Bohrungen ein Spalt verbleibt. Zwischen der Einlaßkammer des Gasdruckreglers und der Auslaßkammer der Gasarmatur besteht eine direkte Verbindung, die von einem einstellbaren Ventil beherrscht ist. Dieses kann über eine Stellvorrichtung von außen verstellt werden, um dem Brenner eine ungeregelte Startgasmenge sofort nach dem Öffnen der Sicherheitsventile zuzuführen. Die Zufuhr der vollen und geregelten Gasmenge erfolgt erst, wenn die genannte Stellmembran den Kolbenschieber aus dessen Ruhestellung in the Arbeitsstellung gebracht hat.

Während bisher der minimale Ausgangsdruck am Gasventil etwa 2 mbar betrug, ist man im Zuge der erwünschten Energieeinsparung bestrebt, mit noch geringeren Minimaldrücken in der Größenordnung von 0,5 mbar zu arbeiten. Bei solchen Anwendungsfällen erweist sich die im Stand der Technik übliche Erzeugung des minimalen Steuerdrucks für das membrangesteuerte Gasventil als zu ungenau. Die im Anspruch 1 gekennzeichnete Erfindung schafft hier Abhilfe. Der minimale Steuerdruck für das membrangesteuerte Gasventil wird hier unmittelbar hinter dem Einschaltventil abgezweigt. Darüber hinaus läßt sich eine Vereinfachung des Druckreglers dadurch erzielen, daß die erforderliche Drosselstelle zwischen Eingangsdruck und Servodruckkammer des Druckreglers durch die Ventilstange des Einschaltventils im Zusammenwirken mit der Ventilstangenbohrung gebildet wird, so daß besondere mit einer Drosselstelle versehene Kanäle im Gehäuse für diesen Zweck überflüssig werden. Dies führt zu einer Vereinfachung des konstruktiven Aufbaus. Weitere vorteilhafte Ausgestaltungen der Erfindung ergeben sich aus den Unteransprüchen. Die Erfindung wird nachfolgend anhand eines in der Zeichnung wiedergegebenen Ausführungsbeispiels erläutert. Dabei zeigt:
- Figur 1a: den Aufbau des Druckreglers im Schnitt bei geschlossenen Einschaltventil;
- Figur 1b: eine entsprechende Darstellung bei geöffnetem Einschaltventil;
- Figur 2: einen im Maßstab vergrößerten Ausschnitt aus Fig. 1a;
- Figur 3: in schematischer Darstellung das Zusammenwirken des Servodruckreglers mit einem membrangesteuerten Gasventil; und
- Figur 4: schematisch den Verlauf des Ausgangsdruckes P in Abhängigkeit vom Strom I in der Erregerspule.

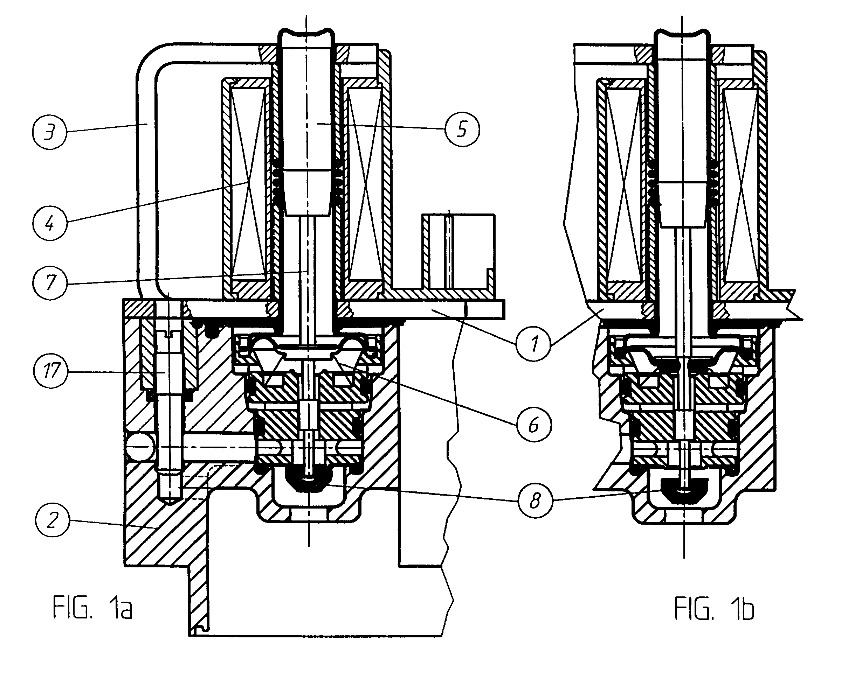

Bei der Beschreibung der Fig. 1a und 1b ist hinsichtlich des konstruktiven Aufbaus des Druckreglers jeweils zugleich auf Fig. 2 hinzuweisen, welche diesen Aufbau wegen des größeren Maßstabs noch deutlicher wiedergibt.Auf die Deckplatte 1 des Ventilgehäuses 2 ist ein elektromagnetischer Linearantrieb aufgesetzt, der aus einem Magnetjoch 3, einer Erregerspule 4 und einen im Innenraum der Spule längs verschiebbaren Kolben oder Anker 5 besteht. Der Anker 5 wird durch eine sich einseitig gehäusefest abstützende Feder 6, z.B. einer Kegel- oder Schraubenfeder, bei stromloser Spule 4 in der in den Figuren 1a und 2 gezeigten Ruhestellung gehalten. Eine Ventilstange 7 ragt aus dem Innenraum der Spule 4 nach unten heraus und trägt an ihrem unteren Ende den Schließkörper 8 eines Einschaltventils. Der dazugehörige Ventilsitz 9 wird durch den unteren Rand eines Einsatzstückes 10 gebildet, welches durch O-Ringe 11 abgedichtet in eine im Durchmesser abgestufte Durchgangsöffnung 12 des Ventilgehäuses 2 eingesetzt ist. Die erste Kammer 13 in Strömungsrichtung hinter dem Einschaltventil 8, 9 ist über einen Kanal 14 und eine einstellbare Drossel 15 an einen Kanal 16 angeschlossen, der mit dem Auslaß des Gasventils in Verbindung steht. Mit der Drosselschraube 17 läßt sich der minimale Ausgangsdruck des Gasventils einstellen.

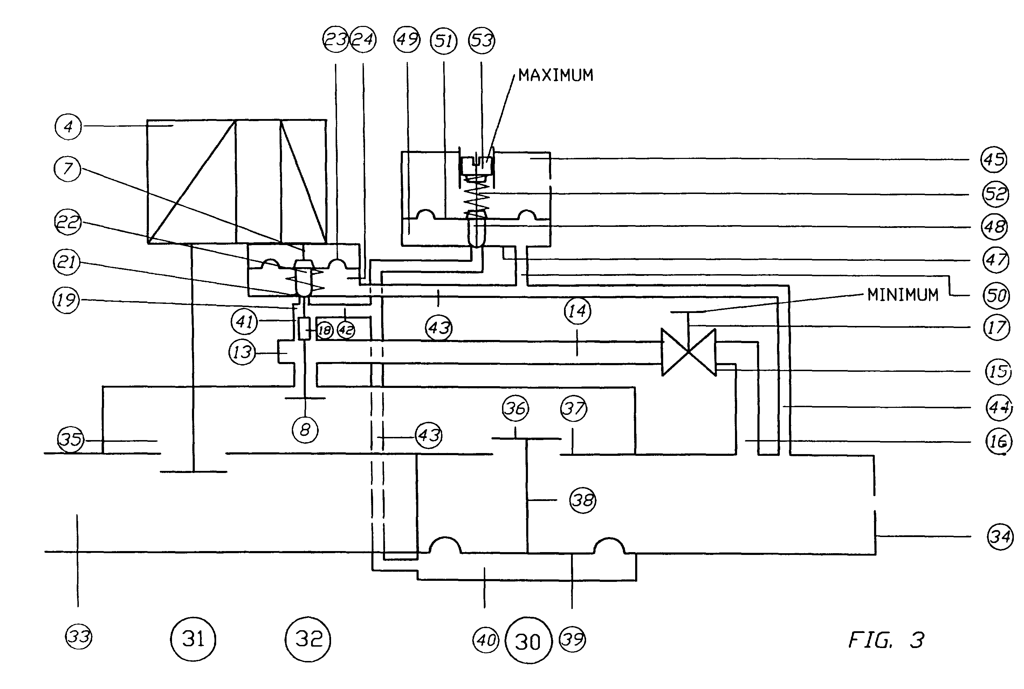

Die Ventilstange 7 trägt im Anschluß an die Kammer 13 einen Kolben 18, der zusammen mit der ihn umgebenden Bohrung in der Wand 19 eine Drosselstelle vorgegebenen Durchlaßquerschnitts und vorgegebener Länge bildet. Der Servosteuerdruck für die Antriebskammer des Hauptgasventils wird der Kammer 19 entnommen. Diese steht über einen die Ventilstange 7 umgebenden Kanal 20 mit einem Ventilsitz 21 in Verbindung, welchem als Schließkörper der zentrale Teil 22 einer Membran 23 gegenübersteht. Die Ventilstange 7 ist in diesem zentralen Teil 22 der Membran 23 abgedichtet gehalten, z.B. eingeknöpft (vgl. Fig. 1b). Die Rückstellfeder 6 wird mit ihrem oberen Ende in eine umlaufende Rille des Zentralteils 22 der Membran 23 eingedrückt. Eine Kammer 24 zwischen Membran 23 und Ventilsitz 21 ist, wie in Figur 3 schematisch dargestellt ist, an einen Kanal 43, 44 angeschlossen, der mit der Auslaßseite des Gasventils in Verbindung steht. Ein auf die Ventilstange 7 aufgesetzter Membranteller 25 stützt den Zentralteil 22 der Membran 23 an der Ventilstange 7 ab. Eine membranartige Dichtung 26 sorgt für die Abdichtung zwischen der abgestuften Gehäuseöffnung 12 und der Deckplatte 1.

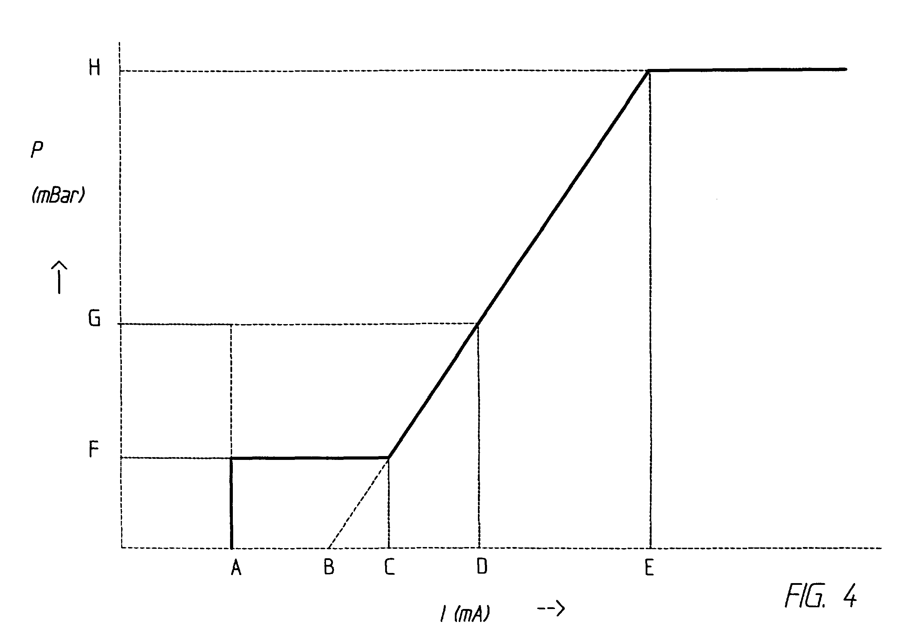

Die Arbeitsweise des Druckreglers wird nachfolgend in Verbindung mit dem in Figur 3 schematisch wiedergegebenen Gasregelgerät bestehend aus Hauptgasventil 30, Sicherheitsventil 31 und Servodruckregler 32 beschrieben. Gas gelangt von einer Versorgungsleitung über den Einlaß 33 in das Gasregelgerät und verläßt dieses durch den Auslaß 34, an welchen beispielsweise ein Brenner angeschlossen ist. Der Regler kann erst wirksam werden, wenn das Sicherheitsventil 31 geöffnet ist. Aufbau und Arbeitsweise solcher Sicherheitsventile sind bekannt. In Figur 3 sind alle Ventile der Deutlichkeit halber in Offenstellung wiedergegeben, obwohl sie in Ruhestellung durch nicht eingezeichnete Rückstellfedern geschlossen gehalten werden. Die Werte des Druckes P am Ausgang 34 des Gasregelgerätes in Abhängigkeit vom Strom I durch die Erregerspule 4 des Magnetantriebs sind in Figur 4 veranschaulicht.

Sobald Gas durch das Sicherheitsventil 31 in den Raum 35 unterhalb des Einschaltventils 8, 9 eintritt, kann der Brennerzyklus in Gang gesetzt werden. Hierzu wird der Erregerspule 4 des Magnetantriebs ein Strom I zugeführt, welcher über das von ihm erzeugte Magnetfeld eine den Anker 5 und mit ihm den Schließkörper 8 des Einschaltventils nach unten drückende Kraft erzeugt. Überschreitet dieser Strom I einen Mindestwert A (vgl. Figur 4), so hebt der Schließkörper 8 vom Ventilsitz 9 ab und geht in die aus Figur 1b ersichtliche Offenstellung über. Mit dem Öffnen des Einschaltventils 8, 9 fließt Gas in die Kammer 13. Von dort gelangt ein Mindestgasdruck F durch den Kanal 14 und die Minimum-Einstellvorrichtung 15 sowie den Kanal 16 zum Auslaß 34 des Gasregelgerätes und von dort zum Brenner. Das Hauptgasventil bestehend aus Schließkörper 36, Ventilsitz 37, Ventilstange 38, Membran 39 und Antriebskammer 40 bleibt dabei unter der Einwirkung einer nicht eingezeichneten Rückstellfeder geschlossen. Die kolbenartige Verdickung 18 der Ventilstange 7 in Verbindung mit der den Kolben umgebenden Wand 41 bildet eine Drosselstelle, welche die den Servodruck führende Kammer 19 von der den Einlaßdruck führenden Kammer 13 pneumatisch trennt. Beim Öffnen des Einschaltventils 8, 9 durch den Elektromagneten 3, 4, 5 wird die Ventilstange soweit nach unten verschoben, daß der Drosselkolben 18 vollständig in die Bohrung 41 eintaucht. Über das geöffnete Einschaltventil 8 und diese Drosselstelle 18, 41 gelangt somit Gas in die Kammer 19, wo sich allmählich ein Steuerdruck aufbaut. Dieser wird über die Kanäle 42 und 43 der Antriebskammer 40 des Hauptventils 30 zugeführt. Sobald die vom Steuerdruck in der Antriebskammer 40 erzeugte, nach oben auf die Membran 39 einwirkende Kraft die von einer nicht dargestellten Schließfeder ausgeübte, nach unten auf die Membran 39 gerichtete Kraft zuzüglich der vom Eingangsdruck von oben auf den Schließkörper 36 einwirkenden Kraft übersteigt, bewegt die Membran 39 die Ventilstange 38 nach oben und hebt den Schließkörper 36 vom Ventilsitz 37. Damit gelangt Gas vom Einlaß 33 über die Kammer 35 und durch das Hauptventil 36, 37 zum Auslaß 34, und zwar mit einer Durchsatzmenge, welche durch den in den Figuren 1 und 2 im einzelnen dargestellten modulierenden Druckregler 32 bestimmt wird. Je nach Höhe des mit der Drosselachse 17 eingestellten Mindestgasdrucks, z.B. F oder G in Fig. 4, beginnt dieser modulierende Druckanstieg im Punkt C oder D von Fig. 4. Je höher der eingestellte Mindestdruck ist, umso stärker muß der Erregerstrom I sein, um eine lineare Erhöhung des Ausgangsdruckes P zu erzielen. Punkt B bezeichnet den Startpunkt der linearen Druckerhöhung infolge der Krafteinwirkung des Erregerstroms I auf die Ventilstange 7. Zusätzlich fließt die zuvor erwähnte Mindestgasmenge über die Kanäle 14 und 16 zum Auslaß 34. Die Öffnung des Einschaltventils 8, 9 bei einem vorgegebenen Stromwert A ist unabhängig vom Verlauf der modulierenden Kennlinie B-E des Servodruckreglers.

Der sich in der Kammer 19 aufbauende Steuerdruck gelangt zugleich unter die Membran 23 und hält dort der vom Anker 5 ausgeübten Kraft das Gleichgewicht. Nimmt der Druck in der Kammer 19 zu, so hebt der Schließkörper 22 weiter vom Sitz 21 ab, so daß ein Teil dieses Steuerdrucks in der Kammer 19 über die Leitungen 43 und 44 zum Ventilausgang 34 hin abgebaut wird, bis das Ventil 21, 22 wieder schließt. Dies geschieht, sobald das Kräftegleichgewicht zwischen der auf die Membran 23 von unten einwirkende pneumatischen Kraft des Drucks in der Kammer 24 gleich der von oben durch den Anker 5 erzeugten und auf die Ventilstange 7 einwirkenden Kraft ist. Da die Mindestgasmenge allein durch die Stellung der Einstelldrossel 15, 17 bestimmt wird und nicht von der jeweiligen Reglerposition abhängig ist, können auch sehr geringe Mindestgasdrücke am Ausgang 34 des Gasregelventils eingestellt werden. Die Genauigkeit dieses Mindestdrucks hängt von der Druckkonstanz am Eingang 33 ab, wobei jegliche Druckschwankungen am Eingang um das Verhältnis von Eingangs- zu Ausgangsdruck reduziert hinter dem Drosselventil 15 auftreten. Diese Schwankungen sind folglich gering.

Zur Begrenzung des maximalen Druckes H am Auslaß 34 ist ein Druckbegrenzer 45 vorhanden, der über die Leitungen 46 und 42 an die Steuerdruckkammer 19 des Reglers und somit zugleich auch an die Antriebskammer 40 des Hauptventils 30 angeschlossen ist. Steigt der Druck in der Leitung 46 zu stark an, so wird er über das Ventil des Druckbegrenzers 45, bestehend aus Ventilsitz 47 und Schließkörper 48, abgeblasen. Hierzu steht die Druckkammer 49 des Druckbegrenzers über eine Leitung 50 mit der zum Auslaß führenden Leitung 44 in Verbindung. Die Höhe des Maximaldrucks läßt sich mit Hilfe einer auf die Membran 51 des Druckbegrenzers einwirkenden Feder 52 und einer entsprechenden Einstellschraube 53 auf den gewünschten Wert einstellen. Sobald der Erregerstrom I den Wert E überschreitet, bleibt der Ausgangsdruck P auf den Maximalwert H begrenzt.

Soll wegen eines steigenden Wärmebedarfs des vom Brenner beheizten Verbrauchers, z.B. einer Raumheizvorrichtung oder eines Warmwasserbereiters, der Gasdurchsatz zum Brenner erhöht werden, so muß das Hauptgasventil 8, 9 weiter geöffnet, also der Steuerdruck in der Antriebskammer 40 erhöht werden. Hierzu wird der Erregerspule 4 ein stärkerer Strom I zugeführt, so daß die Ventilstange 7 mit größerer Kraft nach unten gedrückt wird. Das Abblasventil 21, 22 öffnet also erst bei einem höheren Druck unter seiner Membran 23. Dies ist der Steuerdruck in der Steuerdruckkammer 19, welcher durch die Gehäusebohrung 20 auf den Schließkörper 22 des Abblasventils einwirkt. Die Stärke des auf diese Weise erhöhten Steuerdrucks ergibt sich wie zuvor beschrieben aus dem Kräftegleichgewicht an der Ventilstange 7. Bei einer gewünschten Verringerung des Gasdurchsatzes zum Brenner wird der Erregerstrom für den Elektromagneten reduziert, so daß das Abblasventil 21, 22 schon bei einem kleineren Steuerdruck öffnet, dieser also niedriger wird und das Hauptventil 36, 37 in Schließrichtung verstellt wird. Anstelle eines Magnetantriebs mit ortsfester Spule und beweglichem Anker könnte als Linearantrieb auch ein Tauchspulantrieb mit ortsfestem Magnetkreis und beweglicher Spule Verwendung finden.

Zum Einstellen des Mindestgasdruckes, z.B. F oder G am Ausgang 34 wird die auf die Membran 51 einwirkende Kraft der Feder 52 auf Null reduziert. Damit kann sich in der Kammer 19 kein Steuerdruck mehr aufbauen. Das Hauptventil 36, 37 bleibt unter der Einwirkung seiner nicht dargestellten Schließfeder geschlossen. Jeglicher Druck in der Kammer 19 wird über das offene Ventil 47, 48 zum Ausgang hin abgebaut. Der Ausgangsdruck P wird somit allein durch die jeweilige Einstellung der den Durchlaßquerschnitt des Kanals 14, 17, 16 verändernden Druckeinstellvorrichtung 15, 17 bestimmt. Er läßt sich als Mindesgasdruck mit der Drosselschraube 17 einstellen.

## Patentansprüche

1. Druckregler zum Erzeugen des Steuerdrucks für ein membrangesteuertes Gasventil (30), wobei
a) der Ausgangssteuerdruck des Druckreglers (32) durch einen elektromagnetischen Linearantrieb (3, 4, 5) vorgegeben wird, welcher
b) zugleich den Einschaltantrieb für ein dem Druckregler vorgeschaltetes Einschaltventil (8, 9) bildet, **dadurch gekennzeichnet**, daß
c) ein den Auslaß des membrangesteuerten Gasventils (30) mit einem Mindest-Gasdruck versorgender Kanal (14, 15, 16) in Strömungsrichtung des Gases unmittelbar hinter dem Einschaltventil (8, 9) abzweigt und mit einer Druckeinstellvorrichtung (15, 17) für diesen Mindestdruckkanal versehen ist, und
d) zwischen dieser Abzweigung (13, 14) und einer den geregelten Steuerdruck für das membrangesteuerte Gasventil (30) liefernden Kammer (19) des Druckreglers (32) eine Drosselstelle (18, 41) vorgesehen ist.

2. Druckregler nach Anspruch 1, **dadurch gekennzeichnet**, daß die Drosselstelle (18, 41) durch den Spalt zwischen einer den Schließkörper (8) des Einschaltventils (8, 9) tragenden und mit dem beweglichen Anker (5) des Linearantriebs (3, 4, 5) verbundenen Ventilstange (7) einerseits und der sie umgebenden zylindrischen Gehäusebohrung (41) andererseits gebildet ist.

3. Druckregler nach Anspruch 2, **dadurch gekennzeichnet**, daß die Ventilstange (7) im Bereich der die Drosselstelle bildenden Gehäusebohrung (41) einen kolbenartig vergrößerten Durchmesser (18) aufweist und die Breite sowie die Länge des Spaltes die Drosselwirkung bestimmen.

## Claims

1. Pressure regulator for generating a control pressure for a diaphragm-operated gas valve (30), whereby
a) the output control pressure of the pressure regulator (32) is determined by a linear electromagnetic operator (3, 4, 5), which
b) provides also the on-operator for an on-off valve (8, 9) lined up with said pressure regulator, **characterized in that**
c) a passageway (14, 15, 16) for supplying gas at a minimum pressure to the outlet of said diaphragm-operated gas valve (30) branches off immediately behind said on-off valve (8, 9) in flow direction of the gas, said passageway including adjusting means (15, 17) for said minimum pressure passageway, and
d) a throttling device (18, 41) is located between said branch (13, 14) and a chamber (19) of said pressure regulator (32) providing said controlled pressure to said diaphragm-operated gas valve (30).

2. Pressure regulator according to claim 1, **characterized in that** said throttling device (18, 41) being formed by a gap between a valve stem (7) and a surrounding wall of a bore (41) in a housing, said valve stem carrying a closure member (8) of said on-off valve (8, 9) and being connected to a moveable anchor (5) of said linear operator (3, 4, 5).

3. Pressure regulator according to claim 2, **characterized in that** said valve stem (7) is formed with an enlarged cylindrical section in the region of said bore (41), the width and length of the gap determining the throttling action.

## Revendications

1. Régulateur de pression servant à produire la pression de commande pour une soupape à gaz (100) commandée par une membrane, dans lequel
a) la pression de sortie du régulateur de pression (39) est prédéterminée par un dispositif d'entraînement électromagnétique linéaire (3, 4, 5), qui
b) forme simultanément le dispositif d'entraînement d'acti-vation pour une soupape d'activation (8, 9) montée en amont du régulateur de pression,
caractérisé en ce que
c) un canal (14, 15, 16), qui alimente la sortie de la soupape à gaz (30) commandée par la membrane avec une pression de gaz minimale, s'étend en dérivation directement en aval de la soupape d'activation (8, 9) dans la direction de circulation du gaz, et comporte un dispositif de réglage de pression (15, 17) pour ce canal à pression minimale, et
d) un point d'étranglement (18, 41) est prévu entre cette dérivation (13, 14) et une chambre (19) du régulateur de pression (32), qui délivre la pression de commande réglée pour la soupape à gaz (30) commandée par la membrane.

2. Régulateur de pression selon la revendication 1, caractérisé en ce que le point d'étranglement (18, 41) est formé par la fente présente entre une tige de soupape (7), qui porte le corps de fermeture (8) de la soupape d'activation (8, 9) et qui est reliée à l'armature mobile (5) du dispositif d'entraînement linéaire (3, 4, 5), d'une part, le perçage cylindrique (41) du boîtier, qui entoure cette tige de soupape, d'autre part.

3. Régulateur de pression selon la revendication 2, caractérisé en ce que la tige de soupape (7) comporte, au niveau du perçage (41) du boîtier, qui forme le point d'étranglement, un diamètre (18) qui augmente à la manière d'un piston, et en ce que la largeur ainsi que la longueur de la fente déterminent l'effet d'étranglement.
